# EUROPEAN PATENT APPLICATION

(11) **EP 4 268 587 A1**
(43) Date of publication of application: **01.11.2023**
(21) Application number: 21909916.5
(22) Date of filing: 18.10.2021
(51) Int. Cl.: A01K 1/01

(54) **ANIMAL TOILET**

(30) Priority: 22.12.2020 JP 2020211999
(71) Applicant: Daiki Co. Ltd., Tokyo 107-0052 (JP)
(72) Inventor: YOSHINAGA Junji, Tokyo 107-0052 (JP)
(74) Representative: Müller-Boré & Partner Patentanwälte PartG mbB
(86) International application number: PCT/JP2021/038372
(87) International publication number: WO 2022/137759

(57) **Abstract**

Provided is an animal toilet in which urine is unlikely to stay on an inclining part of a partition portion. An animal toilet (1) includes a partition portion (20), an upper space (S1), and a lower space (S2). The partition portion (20) has a bottom part (22) in which a through hole (23) allowing urine to pass therethrough is formed, and an inclining part (24) that inclines downward toward the bottom part (22). The upper space (S1) is present above the partition portion (20), and is a space in which a plurality of grains (30) are disposed. The lower space (S2) is present below the partition portion (20), and is a space in which the urine that has passed through the through hole (23) accumulates. The upper surface of the inclining part (24) is provided with a plurality of projections (25) that are apart from each other and arranged in a lattice pattern. The distance between the adjacent projections (25) is smaller than the particle diameter of each of the grains (30).

## Description

### Technical Field

The present invention relates to an animal toilet.

### Background Art

A conventional animal toilet is disclosed, for example, in Patent Document 1. The animal toilet disclosed in Patent Document 1 includes a partition portion (a bottom face part of an upper container), an upper space (a space in the upper container), and a lower space (a part of a space in a lower container, the part being present below the partition portion). A through hole that allows urine to pass therethrough is formed in a bottom part (a plane part) of the partition portion. Surroundings of the plane part is an inclining part that inclines downward toward the plane part. A plurality of grains that transmits urine are disposed in the upper space. A water-absorbing sheet that absorbs urine is disposed in the lower space. In this animal toilet, urine excreted on the grains moves from the upper space to the lower space via the through hole of the partition portion after passing through gaps between the grains.

### Citation List

### Patent Document

Patent Document 1: JP 2014-236683 A

### Summary of Invention

### Technical Problem

In the animal toilet described above, a though hole that allows urine to pass therethrough is not formed in the inclining part of the partition portion. Therefore, in a case where urine that has passed through gaps between the grains arrives in the inclining part, it follows that the urine moves to the lower space via the through hole after flowing to the plane part along the inclining part. However, the grains laid on the partition portion sometimes prevent urine from flowing, and thereby the urine stays on the inclining part. This causes malodors drifting outside the animal toilet.

The present invention has been made in view of the above-described problem, and it is an object thereof to provide an animal toilet in which urine is unlikely to stay on an inclining part of a partition portion.

### Solution to Problem

An animal toilet according to the present invention includes: a partition portion that has a bottom part in which a through hole allowing urine to pass therethrough is formed, and an inclining part that inclines downward toward the bottom part; an upper space in which a plurality of grains are disposed, the upper space being present above the partition portion; and a lower space in which the urine having passed through the through hole accumulates, the lower space being present below the partition portion. An upper surface of the inclining part is provided with a plurality of projections arranged in a lattice pattern, the projections being apart from each other. A distance between the adjacent projections is smaller than a particle diameter of each of the grains.

In this animal toilet, the upper surface of the inclining part of the partition portion is provided with the plurality of projections that are apart from each other and arranged in a lattice pattern. Thus, a flow path for urine can be secured between the projections. Moreover, because the distance between the adjacent projections is smaller than the particle diameter of each grain, the flow path is unlikely to be blocked by the grains. For this reason, it is possible to make a situation less likely to occur in which the grains prevent urine from flowing. That makes urine less likely to stay on the inclining part.

### Advantageous Effects of Invention

According to the present invention, it is possible to implement an animal toilet in which urine is unlikely to stay on an inclining part of a partition portion.

### Brief Description of Drawings

FIG. 1 is an end view showing an embodiment of an animal toilet according to the present invention.
FIG. 2 is an end view showing a container 10.
FIG. 3 is a front view showing the container 10.
FIG. 4 is a plane view showing the container 10.
FIG. 5 is a perspective view showing a drawer portion 14.
FIG. 6 is a plane view showing a partition portion 20.
FIG. 7 is an end view taken along line VII-VII in FIG. 6.
FIG. 8 is an end view taken along line VIII-VIII in FIG. 6.
FIG. 9 is a diagram for illustrating the arrangement pattern of projections 25.
FIG. 10 is a diagram for illustrating the height h1 of the projection 25.
FIG. 11 is a diagram for illustrating an effect of the animal toilet in FIG. 1.
FIG. 12 is a diagram for illustrating the arrangement pattern of the projections 25 according to a modified example.
FIG. 13 is a diagram for illustrating a modified example of the animal toilet in FIG. 1.

### Description of Embodiments

Hereinafter, an embodiment of the present invention will be described in detail with reference to the drawings. In the description of the drawings, the same elements are given the same reference numerals, and a redundant description will be omitted.

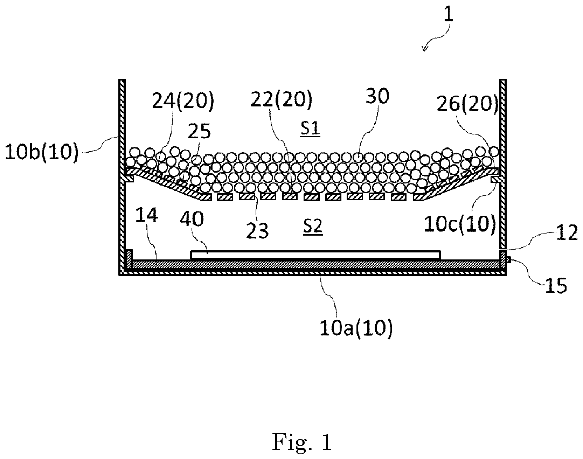

FIG. 1 is an end view showing an embodiment of an animal toilet according to the present invention. Referring to FIG. 1, an outline of the constitution of an animal toilet 1 will be described. The animal toilet 1 includes a container 10, a drawer portion 14, a partition portion 20, a plurality of grains 30, and a water-absorbing sheet 40. The container 10 has a bottom face part 10a and a side face part 10b, and is in a box shape. In the present embodiment, the container 10 is in an approximately rectangular parallelepiped shape. As a material of the container 10, for example, plastic such as polypropylene or polyethylene can be used.

The container 10 has an overhanging part 10c that is provided so as to overhang from the side face part 10b toward the inside of the container 10. The overhanging part 10c may be a projection or a projected rim. The overhanging part 10c may be formed integrally with the side face part 10b, or may be attached to the side face part 10b after being formed separately from the side face part 10b. The overhang length of the overhanging part 10c (the length in the direction perpendicular to the inner surface of the side face part 10b provided with the overhanging part 10c) is, for example, between 5 mm and 15 mm inclusive.

The drawer portion 14 is capable of being inserted in and extracted from the container 10 through an opening 12 formed in the side face part 10b. The drawer portion 14 houses the water-absorbing sheet 40. As a material of the drawer portion 14, for example, plastic such as polypropylene or polyethylene can be used.

The partition portion 20 is placed on the overhanging part 10c. The partition portion 20 is not fixed to the container 10. The partition portion 20 is detachable relative to the container 10. The partition portion 20 is composed of a plate-shaped member. The partition portion 20 has a through hole 23 that allows urine to pass through the through hole 23. The partition portion 20 is provided at a position apart from both the water-absorbing sheet 40 and the upper end of the container 10. Thus, the partition portion 20 divides the inside of the container 10 vertically. That is, the partition portion 20 is disposed so as to divide the internal space of the container 10 into an upper space S1 and a lower space S2. The upper space S1 is present above the partition portion 20, and is a space in which the plurality of grains 30 are disposed. The lower space S2 is present below the partition portion 20, and is a space in which urine that has passed through the through hole 23 accumulates. In this way, the animal toilet 1 includes the upper space S1 and the lower space S2 that are separated by the partition portion 20. As a material of the partition portion 20, for example, plastic such as polypropylene or polyethylene can be used.

The plurality of grains 30 for treating excrement (urine) are disposed in the upper space S1. In the descriptions below, "plurality of grains 30" refers to all of the grains 30 disposed in the upper space S1 unless otherwise indicated. The plurality of grains 30 are disposed in the upper space S1 in a state of being laid on the partition portion 20. When the animal toilet 1 is used, the grains 30 directly receive excreted urine. The grains 30 have a water-repellent property. That is, the grains 30 have the property of not absorbing liquid such as urine at all, or hardly absorbing it.

The grains 30 having the water-repellent property require the water-repellent rate of 80 % or more measured by the following test. First, approximate 50 grams of the grains 30 (sample) are placed in a sieve with the inner diameter of 10 cm and the mesh size of 1 mm. An empty beaker is set under the sieve. Then, 30 ml of water is dripped on the sample over 10 seconds using a syringe with the inner diameter of its outer cylinder of 3 cm and the inner diameter of its cylinder tip of 4 mm (60 ml syringe manufactured by Terumo Corp.). After waiting 1 minute, the quantity of the water in the beaker is measured. The ratio of the measured water quantity with respect to the quantity of the dripped water (30 ml) shall be the water-repellent rate. That is, if the water quantity in the beaker is 24 ml or more, the water-repellent rate is 80 % or more, and therefore the grains 30 are found to have the water-repellent property. For reference, the water-repellent rate of general water-absorbing cat litter, which is commercially available, is about 5 %.

The grains 30 are each formed in a granular shape. Examples of the granular shape include a sphere, column, and ellipsoid. The particle diameter of the grain 30 is, for example, between 10 mm and 25 mm inclusive. The particle diameter of each grain 30 is preferably larger than 15 mm. As used herein, the particle diameter is defined as the diameter of the minimum sphere that can include the grain 30. The grain 30 preferably contains an organic substance as its main material. As used herein, the main material refers to the material that accounts for the highest weight ratio in the grain 30, out of one or more materials constituting the grain 30. As the organic substance, for example, papers, used tea leaves, plastics, or bean curd lees can be used.

The papers refer to a material composed mainly of pulp. Examples of the papers include, in addition to ordinary paper, a vinyl chloride wallpaper classified product, photographic paper, release paper, fluff pulp, papermaking sludge, and pulp sludge. The vinyl chloride wallpaper classified product is obtained by removing part of polyvinyl chloride from vinyl chloride wallpaper containing paper and polyvinyl chloride. Examples of the plastics include, in addition to ordinary plastic, an aluminum deposited film, and a disposable diaper classified product (plastic obtained by classifying disposable diapers). The bean curd lees are preferably dried bean curd lees. These materials may be subjected to water repellency treatment.

The material(s) constituting the grain 30 may be only one material, or two or more materials. In the former case, the main material described above is the only material constituting the grain 30. In the latter case, the grain 30 is made of a mixture of the main material and other material(s). Gypsum is an example of the other material. Adding gypsum can enhance the water-repellent property of the grain 30. The quantity of gypsum is, for example, between 5 wt.% and 15 wt.% inclusive with respect to the entirety of the grain 30.

The grains 30 can be manufactured by, for example, the following method. First, granules that will serve as the grains 30 are formed by granulating a granulating material (the material(s) constituting the grains 30) with a granulation apparatus. As the granulation apparatus, for example, an extrusion granulator can be used. The granules may be subjected to water repellency treatment as needed. The water repellency treatment can be performed by, for example, coating the surfaces of the granules with a water repellent agent. In the case where the water repellency treatment is not performed, it is preferable that crevices are prevented from forming in the granules as much as possible by increasing the pressure that is applied to the granulating material during granulation. This is because the crevices serve as a path through which moisture such as urine enters inside the grains 30. Prior to the granulation, pretreatment such as pulverization, kneading, and adding water is performed on the granulating material as needed. Also, after the granulation, posttreatment such as sieving (sizing), and drying is performed as needed.

The water-absorbing sheet 40 is disposed in the lower space S2. In the present embodiment, the water-absorbing sheet 40 is disposed in the lower space S2 in a state of being housed in the drawer portion 14. The water-absorbing sheet 40 absorbs urine that has passed through the through hole 23 of the partition portion 20. That is, the urine having passed through the through hole 23 accumulates in the lower space S2 in a state of being absorbed by the water-absorbing sheet 40.

When the animal toilet 1 is used, urine excreted on the grains 30 flows downward, passing through gaps between the grains 30. The urine moves from the upper space S1 to the lower space S2 via the through hole 23 of the partition portion 20, and then is absorbed by the water-absorbing sheet 40.

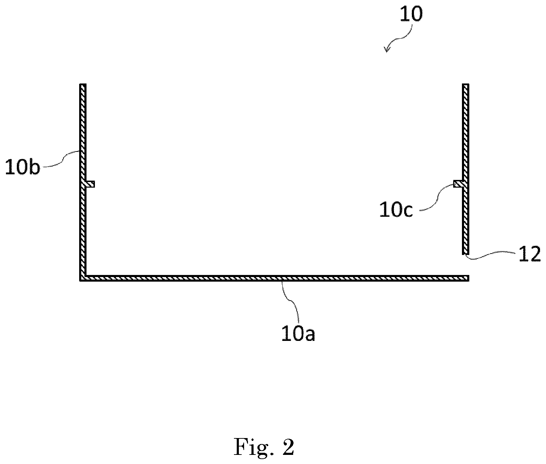

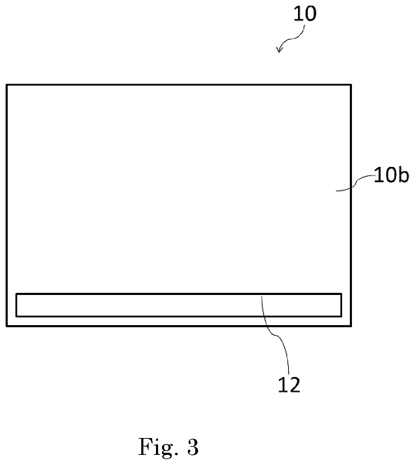

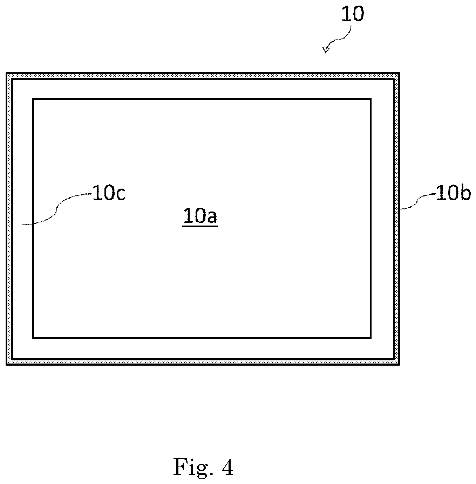

Hereinafter, referring to FIG. 2 to FIG. 10, the constitution of each portion of the animal toilet 1 will be described in detail. FIG. 2, FIG. 3 and FIG. 4 are, respectively, an end view, a front view and a plane view showing the container 10. As shown in FIG. 2 and FIG. 3, the opening 12 for inserting and extracting the drawer portion 14 is formed in the side face part 10b of the container 10. The opening 12 is located near the bottom face part 10a, and in a horizontally long rectangular shape. The length in the horizontal direction (right/left direction in FIG. 3) of the opening 12 is nearly equal to the breadth of the inside of the container 10, and is, for example, between 20 cm and 40 cm inclusive. The length in the vertical direction (top/bottom direction in FIG. 3) of the opening 12 is, for example, between 2 cm and 5 cm inclusive. Also, as shown in FIG. 4, the overhanging part 10c is composed of a projected rim that is provided annularly over the entirety of the inner surface of the side face part 10b in a plane view in the present embodiment.

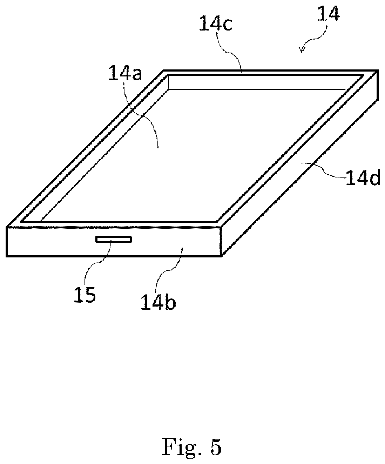

FIG. 5 is a perspective view showing the drawer portion 14. The drawer portion 14 has a bottom board 14a, a front board 14b, a rear board 14c, and a pair of side boards 14d. The size of the bottom board 14a is nearly equal to the size of the bottom face part 10a of the container 10. The front board 14b has nearly the same shape and size as the opening 12. A grip 15 is attached to the front board 14b.

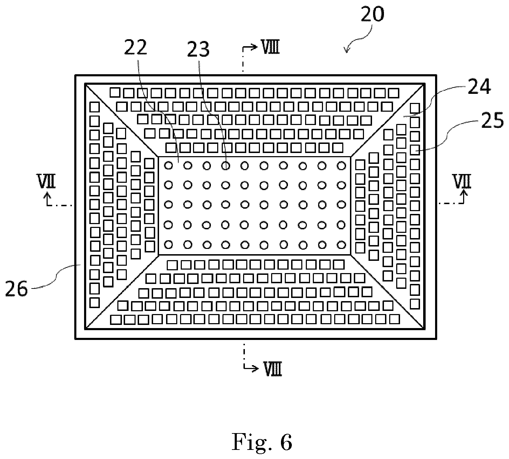

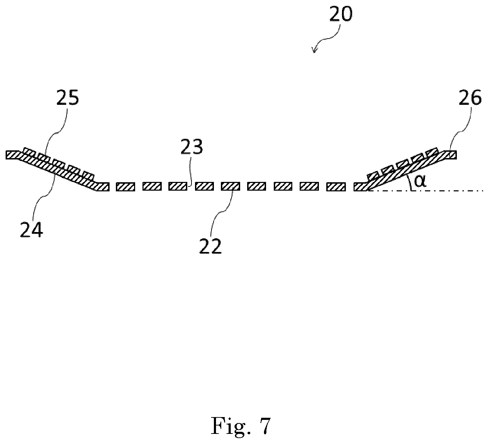

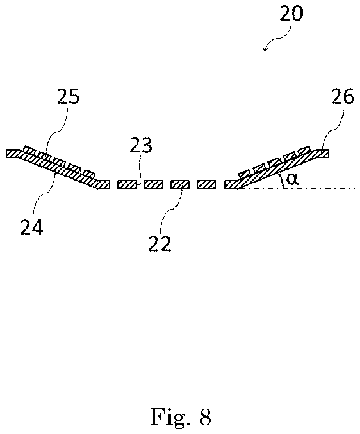

FIG. 6 is a plane view showing the partition portion 20. Also, FIG. 7 and FIG. 8 are end views taken along line VII-VII and line VIII-VIII in FIG. 6, respectively. The partition portion 20 is in an approximately rectangular shape in a plane view (see FIG. 6). As used herein, "approximately rectangular shape" means that the shape includes not only a rectangle but also a shape similar to a rectangle such as a round corner rectangle. The partition portion 20 has a bottom part 22, an inclining part 24, and a rim part 26.

The bottom part 22 is located in the central part of the partition portion 20 in a plane view. The area ratio of the bottom part 22 with respect to the partition portion 20 in a plane view is preferably 50 % or less, and more preferably 25 % or less. The bottom part 22 is in a rectangular flat plate shape, and constitutes a bottom face of the partition portion 20. The partition portion 20 is disposed in the container 10 such that the bottom part 22 becomes horizontal. The through hole 23 is formed in the bottom part 22. In the present embodiment, a plurality of the through holes 23 are formed in the bottom part 22. The through holes 23 allow urine to pass therethrough, whereas the through holes 23 do not allow the grain 30 to pass therethrough. That is, the through holes 23 each have such a size and shape that urine can pass through the through holes 23, whereas the grains 30 cannot pass through the through holes 23.

The inclining part 24 is located in the surroundings of the bottom part 22. Specifically, the inclining part 24 is composed of four parts. The four parts of the inclining part 24 are connected to four sides of the bottom part 22, respectively. Each part of the inclining part 24 is in a trapezoidal flat plate shape. As can be seen from FIG. 7 and FIG. 8, the inclining part 24 inclines downward toward the bottom part 22. The inclination angle α of the inclining part 24 is preferably between 10° and 50° inclusive, and more preferably between 20° and 40° inclusive.

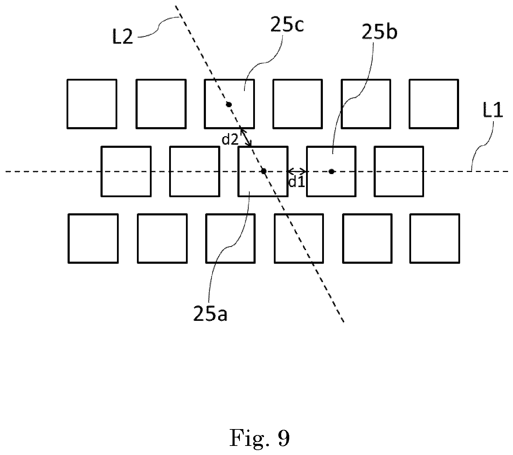

As shown in FIG. 9, an upper surface of each part of the inclining part 24 is provided with a plurality of projections 25 that are apart from each other and arranged in a lattice pattern. FIG. 9 is a diagram showing the projections 25 viewed from a direction perpendicular to the upper surface of the inclining part 24. The plurality of projections 25 are arranged two-dimensionally and regularly. The plurality of projections 25 are provided over the substantially entire upper surface of the inclining part 24. In the present embodiment, the plane shape of each projection 25 is a square. As used herein, the plane shape of each projection 25 is defined as the shape of the projection 25 when viewed from a direction perpendicular to the upper surface of the inclining part 24 provided with the projection 25.

The plurality of projections 25 are arranged in a slanting lattice pattern. As used herein, the slanting lattice pattern means that, when one projection 25 (projection 25a) is noticed, a straight line L1 passing the center of the projection 25a and the center of the projection 25 (projection 25b) that is closest to the projection 25a, and a straight line L2 passing the center of the projection 25a and the center of the projection 25 (projection 25c) that is next closest to the projection 25a intersect obliquely with each other. The projection 25b is the projection 25 that has the minimum distance between the center thereof and the center of the projection 25a. The projection 25c is the projection 25 that has the minimum distance between the center thereof and the center of the projection 25a, out of the projections 25 that are not on the straight line L1. Note that the distance between the center of the projection 25a and the center of the projection 25c may be the same as the distance between the center of the projection 25a and the center of the projection 25b.

The distance between the adjacent projections 25 is smaller than the particle diameter of each grain 30. The distance is preferably 8 mm or less, and more preferably 4 mm or less. As used herein, the distance between the adjacent projections 25 is defined as the distance between the two projections 25 along a straight line passing the centers of the both projections 25. For example, the distance d1 between the projection 25a and the projection 25b is equal to the distance from an intersection (the closer intersection to the projection 25b) of the straight line L1 and the projection 25a to an intersection (the closer intersection to the projection 25a) of the straight line L1 and the projection 25b. Similarly, the distance d2 between the projection 25a and the projection 25c is equal to the distance from an intersection (the closer intersection to the projection 25c) of the straight line L2 and the projection 25a to an intersection (the closer intersection to the projection 25a) of the straight line L2 and the projection 25c.

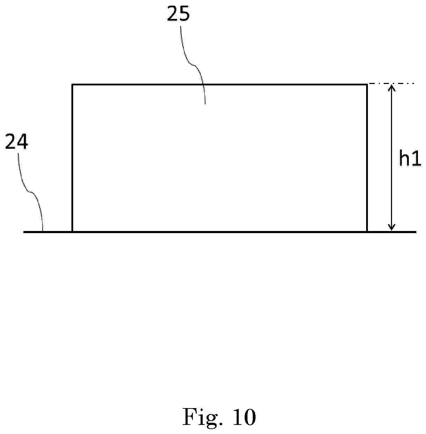

The height h1 (see FIG. 10) of each projection 25 is preferably larger than the distance between this projection 25 and the adjacent projection 25. As used herein, the height h1 is defined as the size in a direction perpendicular to the upper surface of the inclining part 24 provided with the projection 25. The height h1 is preferably 5 mm or more, and more preferably 10 mm or more.

The diameter of each projection 25 is preferably larger than the distance between this projection 25 and the adjacent projection 25. As used herein, the diameter of each projection 25 is defined as the diameter of the minimum circle that can include the plane shape of the projection 25. In the case where the plane shape of the projection 25 is a square as in the present embodiment, the diameter of the projection 25 is equal to the length of the diagonal of the square. The diameter of each projection 25 is preferably 10 mm or more, and more preferably 20 mm or more.

The rim part 26 is located in the surroundings of the inclining part 24, and constitutes the rim of the partition portion 20. The rim part 26 does not incline, and is provided in parallel with the bottom part 22. The rim part 26 is a part that is placed on the overhanging part 10c of the container 10. The lower end of the inclining part 24 is connected to the bottom part 22, and the upper end of the inclining part 24 is connected to the rim part 26. The inclining part 24 inclines downward from the rim part 26 to the bottom part 22. Note that the through hole 23 is not formed in the inclining part 24 or the rim part 26. That is, all through holes 23 provided in the partition portion 20 are present only in the bottom part 22.

The effects of the animal toilet 1 will be described. In the animal toilet 1, the upper surface of the inclining part 24 of the partition portion 20 is provided with the plurality of projections 25 that are apart from each other and arranged in a lattice pattern. Thus, a flow path for urine can be secured between the projections 25. Moreover, because the distance between the adjacent projections 25 is smaller than the particle diameter of each grain 30, the flow path is unlikely to be blocked by the grains 30. For this reason, it is possible to make a situation less likely to occur in which the grains 30 prevent urine from flowing. That makes urine less likely to stay on the inclining part 24. Accordingly, the animal toilet 1 is implemented in which urine is unlikely to stay on the inclining part 24 of the partition portion 20.

Moreover, in the case where the partition portion 20 has the bottom part 22 and the inclining part 24 in this way, it follows that the bottom part 22 is present in only a part of the partition portion 20 in a plane view. For this reason, it is possible to limit the region where urine drops to the lower space S2 via the through hole 23. In this case, it is sufficient that the water-absorbing sheet 40 has a size enough to cover the above-described region (the region under the bottom part 22) even if the water-absorbing sheet 40 does not have a size enough to cover the entire region under the partition portion 20. Therefore, it is possible to enhance the degree of freedom in selecting the water-absorbing sheet 40.

From this viewpoint, the area ratio of the bottom part 22 with respect to the partition portion 20 in a plane view is preferably 50 % or less, and more preferably 25 % or less. On the other hand, if the area ratio is too small, the area ratio of the through holes 23 with respect to the partition portion 20 in a plane view becomes also smaller, and thereby urine is likely to be prevented from smoothly moving from the upper space S1 to the lower space S2. From this viewpoint, the above-described area ratio is preferably 10 % or more.

Incidentally, it can also be considered to provide a plurality of grooves that extend in one direction as a means of securing a flow path for urine in the inclining part. However, in that case, because the flow path for urine is limited to the one direction, the urine becomes more likely to be prevented from flowing due to the grooves being clogged with dirt or the like. In contrast, in the case where the plurality of projections 25 are arranged in a lattice pattern as in the present embodiment, because flow paths for urine are secured in plural directions, there is an advantage that the urine disperses easily and therefore is unlikely to be prevented from flowing.

Reducing the distance between the adjacent projections 25 is advantageous for making the flow path for urine less likely to be blocked by the grains 30. From this viewpoint, the distance is preferably 8 mm or less, and more preferably 4 mm or less. On the other hand, if the above-described distance is too small, the flow path for urine becomes narrower, and thereby the urine is likely to be prevented from flowing smoothly. From this viewpoint, the above-described distance is preferably 2 mm or more.

In the case where the height h1 of each projection 25 is larger than the above-described distance, the flow path for urine can be secured widely in the height direction of the projection 25. From this viewpoint, the height h1 is preferably 5 mm or more, and more preferably 10 mm or more. On the other hand, if the height h1 is too large, the flow path for urine becomes deeper, and thereby it is difficult to remove dirt or the like with which the flow path is clogged. From this viewpoint, the height h1 is preferably 20 mm or less.

In the case where the diameter of each projection 25 is larger than the above-described distance, the upper surface of the projection 25 becomes broader, which is advantageous for laying the grains 30 stably on the partition portion 20. From this viewpoint, the diameter of each projection 25 is preferably 10 mm or more, and more preferably 20 mm or more. On the other hand, if the diameter of each projection 25 is too large, urine becomes more likely to stay on the upper surface of the projection 25. From this viewpoint, the diameter of each projection 25 is preferably 30 mm or less.

The plane shape of each projection 25 is a square. In the case where the plane shape of each projection 25 is a regular polygon in this way, geometric symmetry of the plurality of projections 25 becomes high as a whole when the projections 25 are arranged in a lattice pattern. This contributes to enhancing aesthetic appearance of the partition portion 20 and eventually the animal toilet 1.

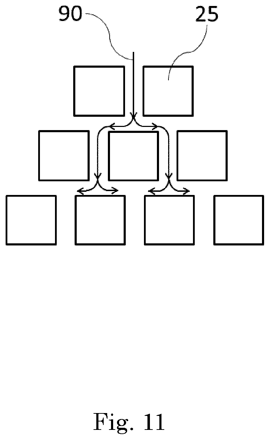

The plurality of projections 25 are arranged in a slanting lattice pattern. In this case, as shown in FIG. 11, because the projection 25 is present ahead of the flow path for urine 90, the flow of the urine 90 is likely to be divided by this projection 25. Thus, urine becomes much less likely to be prevented from flowing due to the dispersion of the urine being promoted.

The plurality of projections 25 are provided over the substantially entire upper surface of the inclining part 24. Thus, urine can flow smoothly on any positions of the inclining part 24.

Enlarging the inclination angle α of the inclining part 24 is advantageous for securing smooth flow of urine on the inclining part 24. From this viewpoint, the inclination angle α is preferably 10° or more, and more preferably 20° or more. On the other hand, if the inclination angle α is too large, it becomes difficult to lay the grains 30 stably on the inclining part 24. From this viewpoint, the inclination angle α is preferably 50° or less, and more preferably 40° or less.

Each grain 30 has a water-repellent property. In this case, most of urine excreted on the grains 30 is not absorbed by the grains 30, and passes through gaps between the grains 30. Thus, the urine can be smoothly guided to the partition portion 20.

In a case where the grains 30 with a large particle diameter (a particle diameter more than 15 mm) are used, the grains 30 become less likely to enter between the projections 25. Thus, it is possible to make the flow path for urine less likely to be blocked by the grains 30.

The animal toilet 1 is provided with the container 10 that includes the internal space divided into the upper space S1 and the lower space S2 by the partition portion 20. In this case, it is possible to implement the animal toilet 1 including the upper space S1 and the lower space S2 with one container (the container 10). This is advantageous for simplifying the constitution of the animal toilet 1.

The partition portion 20 is not fixed to the container 10. In this case, the partition portion 20 can be attached to and detached from the container 10 easily.

The partition portion 20 is placed on the overhanging part 10c. Thus, the partition portion 20 can stay at a predetermined position in the container 10 without being fixed to the container 10.

The water-absorbing sheet 40 is disposed in the lower space S2. Thus, urine accumulating in the lower space S2 can be confined in the water-absorbing sheet 40. For this reason, it is possible to ease generation of malodors caused by the urine.

The animal toilet 1 is provided with the drawer portion 14 that is capable of being inserted in and extracted from the container 10. Thus, it is possible to easily carry out the work of replacing a used water-absorbing sheet 40 with a new one.

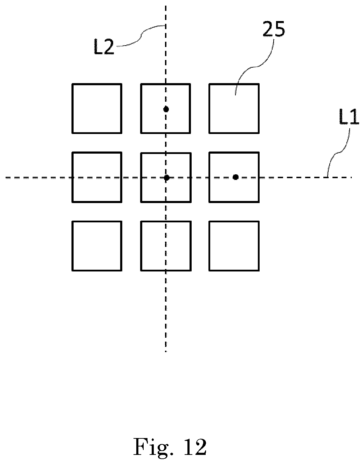

The present invention is not limited to the above-described embodiment, and various modifications can be made. In the above-described embodiment, an example is given in which the plurality of projections 25 are arranged in a slanting lattice pattern. However, the plurality of projections 25 may be arranged in a square lattice pattern as shown in FIG. 12. As used herein, the square lattice pattern means that the straight line L1 and the straight line L2, which were illustrated in FIG. 9, are orthogonal to each other.

In the above-described embodiment, an example is given in which the plane shape of each projection 25 is a square. However, the plane shape of each projection 25 is arbitrary. Examples of the plane shape include regular polygons other than a square, polygons other than regular polygons, a circle, and an ellipse.

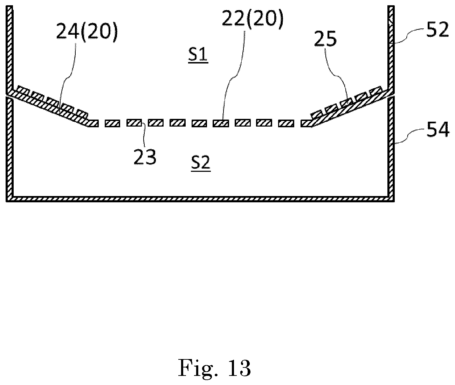

In the above-described embodiment, an example is given in which the upper space S1 and the lower space S2 are constituted by one container 10. However, a container 52 constituting the upper space S 1 and a container 54 constituting the lower space S2 may be provided separately as shown, for example, in FIG. 13. In FIG. 13, the container 52 and the container 54 each have a bottom face part and a side face part, and are in a box shape. The container 52 is put on the container 54. Moreover, the bottom face part of the container 52 is the partition portion 20. However, the partition portion 20 according to this example has the bottom part 22 and the inclining part 24, but does not have the rim part 26.

In the above-described embodiment, an example is given in which the drawer portion 14 is provided. However, it is not essential to provide the drawer portion 14. In the case where the drawer portion 14 is not provided, the water-absorbing sheet 40 is disposed directly on the bottom face part 10a. In that case, the side face part 10b is not provided with the opening 12 naturally.

In the above-described embodiment, an example is given in which the water-absorbing sheet 40 is disposed in the lower space S2. However, it is not essential to dispose the water-absorbing sheet 40 in the lower space S2. In the case where the water-absorbing sheet 40 is not disposed, the drawer portion 14 is also not provided.

In the above-described embodiment, an example is given in which water-repellent grains are used as the grains 30. However, water-permeable grains may be used as the grains 30. The water-permeable grains are configured such that urine passes through the inside of the grains.

### List of Reference Numerals

- 1: Animal Toilet
- 10: Container
- 10a: Bottom Face Part
- 10b: Side Face Part
- 10c: Overhanging Part
- 12: Opening
- 14: Drawer Portion
- 15: Grip
- 20: Partition Portion
- 22: Bottom Part
- 23: Through Hole
- 24: Inclining Part
- 25: Projection
- 26: Rim Part
- 30: Grain
- 40: Water-Absorbing Sheet
- 52: Container
- 54: Container
- 90: Urine
- S1: Upper Space
- S2: Lower Space

## Claims

1. An animal toilet comprising:
a partition portion that has a bottom part in which a through hole allowing urine to pass therethrough is formed, and an inclining part that inclines downward toward the bottom part;
an upper space in which a plurality of grains are disposed, the upper space being present above the partition portion; and
a lower space in which the urine having passed through the through hole accumulates, the lower space being present below the partition portion,
wherein an upper surface of the inclining part is provided with a plurality of projections arranged in a lattice pattern, the projections being apart from each other, and
a distance between the adjacent projections is smaller than a particle diameter of each of the grains.

2. The animal toilet according to claim 1,
wherein the distance is 8 mm or less.

3. The animal toilet according to claim 2,
wherein the distance is 4 mm or less.

4. The animal toilet according to any one of claims 1 to 3,
wherein a height of each of the projections is larger than the distance.

5. The animal toilet according to any one of claims 1 to 4,
wherein a height of each of the projections is 5 mm or more.

6. The animal toilet according to claim 5,
wherein the height of each of the projections is 10 mm or more.

7. The animal toilet according to any one of claims 1 to 6,
wherein a diameter of each of the projections is larger than the distance.

8. The animal toilet according to any one of claims 1 to 7,
wherein a diameter of each of the projections is 10 mm or more.

9. The animal toilet according to claim 8,
wherein the diameter of each of the projections is 20 mm or more.

10. The animal toilet according to any one of claims 1 to 9,
wherein a plane shape of each of the projections is a regular polygon.

11. The animal toilet according to claim 10,
wherein the plane shape is a square.

12. The animal toilet according to any one of claims 1 to 9,
wherein a plane shape of each of the projections is a circle or an ellipse.

13. The animal toilet according to any one of claims 1 to 12,
wherein the plurality of projections are arranged in a slanting lattice pattern.

14. The animal toilet according to any one of claims 1 to 13,
wherein the plurality of projections are provided over the substantially entire upper surface of the inclining part.

15. The animal toilet according to any one of claims 1 to 14,
wherein an area ratio of the bottom part with respect to the partition portion in a plane view is 50 % or less.

16. The animal toilet according to claim 15,
wherein the area ratio of the bottom part with respect to the partition portion in a plane view is 25 % or less.

17. The animal toilet according to any one of claims 1 to 16,
wherein an inclination angle of the inclining part is between 10° and 50° inclusive.

18. The animal toilet according to claim 17,
wherein the inclination angle of the inclining part is between 20° and 40° inclusive.

19. The animal toilet according to any one of claims 1 to 18,
wherein each of the grains has a water-repellent property.

20. The animal toilet according to any one of claims 1 to 19,
wherein a particle diameter of each of the grains is larger than 15 mm.

21. The animal toilet according to any one of claims 1 to 20, further comprising:
a box-shaped container that has a bottom face part and a side face part,
wherein the partition portion is disposed so as to divide an internal space of the container into the upper space and the lower space.

22. The animal toilet according to claim 21,
wherein the partition portion is not fixed to the container.

23. The animal toilet according to claim 22,
wherein the container has an overhanging part that is provided so as to overhang from the side face part toward an inside of the container, and
the partition portion is placed on the overhanging part.

24. The animal toilet according to any one of claims 21 to 23, further comprising:
a water-absorbing sheet that is disposed in the lower space, and absorbs the urine having passed through the through hole.

25. The animal toilet according to claim 24, further comprising:
a drawer portion that houses the water-absorbing sheet,
wherein an opening is formed in the side face part of the container, and
the drawer portion is capable of being inserted in and extracted from the container through the opening.
